Europäisches Patentamt

European Patent Office

Office européen des brevets

(19)

(11) Publication number: **0 250 351**
**A2**

(12)

# EUROPEAN PATENT APPLICATION

(21) Application number: **87500032.5**

(22) Date of filing: **03.06.87**

(51) Int. Cl.⁴: **C 08 G 18/42**
C 08 G 18/62, C 08 G 63/52,
C 08 F 283/01

(30) Priority: **10.06.86 ES 555890**

(43) Date of publication of application:
**23.12.87 Bulletin 87/52**

(84) Designated Contracting States:
**AT BE CH DE FR GB GR IT LI LU NL SE**

(71) Applicant: **HOOCKER, S.A.**
**Comte Borrell 62**
**E-08015 Barcelona (ES)**

(72) Inventor: **Monsó Capellades, José Mariá**
**Muntaner 337**
**E-08021 Barcelona (ES)**

**Colomina Samsó, Octavio**
**Camelias 43-45**
**E-08024 BArcelona (ES)**

**Soler Lladó, José**
**Carrencá 29**
**E-08017 Barcelona (ES)**

(74) Representative: **Curell Sunol, Marcelino et al**
**c/o Dr. Ing. M. Curell Sunol I.I. S.L. Agentes de la**
**Propiedad Industrial Passeig de Gràcia 65 bis**
**E-08008 Barcelona (ES)**

(54) **A Process for the preparation of polymer dispersions in hydroxylated polyesters.**

(57) A process based on a polymerization reaction of an ethylenically unsaturated monomeric compound in a hydroxylated polyester resulting from a polyesterification reaction of a polycarboxylic acid or a derivative thereof, with polyhydroxylated compounds containing from 0.001 to 0.5 mole % of an unsaturated monomer over the total of acid monomers comprising it; the amount of monomeric compounds ranges from 5% to 40% by weight of the reactants.

EP 0 250 351 A2

## Description

## A PROCESS FOR THE PREPARATION OF POLYMER DISPERSIONS IN HYDROXYLATED POLYESTERS

### BACKGROUND OF THE INVENTION

Field of the Invention.

The present invention relates to a process for the preparation of dispersions of polymers in hydroxylated polyesters, appropriate for the preparation of polyurethane foams and elastomers and particularly appropriate for the preparation of microcellular products. Such products consist of white or almost white dispersions, of a solid high polymer or copolymer in a conventional hydroxylated polyester resin having a certain degree of unsaturation in the chain thereof.

The process affords the advantage of providing products having a high content of dispersed polymer, up to 40%, and a whiter colour in view of the higher percentage of styrene contained therein.

Description of the Prior Art.

Polymeric polyols, consisting of dispersions of a solid polymer in the polyols commonly used in this field, are frequently used in the manufacturing processes for flexible polyurethane foams. The use of such products provides advantages such as an increase in the degree of opening of the foam cells and mainly in an improvement of the mechanical properties, derived from an increased hardness: compression strength, tear strength, tensile strength, etc. This allows a reduction in the polyurethane system density since, in view of the improvement, it is possible to maintain the same properties as obtained with higher densities and conventional polyols, with the financial savings that the process involves.

Special attention has been paid in the present invention to the preparation of products for application in the field of microcellular systems for footwear soles, although obviously these processes may be extended to any field related with the systems for polyure thane foams or elastomers.

The importance attained in recent years by the processes of dispersion of polymers in polyols is rather significant, as shown by the abundant literature published thereon. It is gathered therefrom that the most frequent processes are the polymerization, using a conventional polyol as medium therefor, of ethylenically unsaturated monomers, although there are also references to the use of other types of polymer, such as polyureas produced from polyisocyanates and polyamines, always in a polyol.

The polyols commonly used for these processes are mainly polyethers, obtained from the treatment of a polyhydroxylated compound with alkylene oxides, having molecular weights ranging from 1,000 to 10,000.

Less frequent are the references to the use of hydroxylated polyesters, as is the case of this invention, and among the few known, practically none emphasises their use in specific applications.

Examples of these processes are disclosed in GB 1 455 495 which teaches the polymerization of ethylenic compounds in presence of a polyol derived from the treatment of a polyhydroxylated compound with alkylene oxide, with basic catalysis, in solution in an inert solvent such as chlorobenzene or dichlorobenzene. Belgian patent 825 412 and French patent 2 271 261 also disclose processes for the preparation of polymers starting from vinyl monomers such as methacrylates, styrene, acrylonitrile, among others, in a pure polyol polyether using radical generator type catalysts. Belgian patent 835 489 discusses the question of polymeric polyols prepared from vinyl compounds and the preparation of the polyol polyethers used as raw material extensively. Spanish patent 544 832 is in the same field and discloses the preparation of a polymeric polyol polyether from vinyl monomers and proposes the addition of a stabilizing agent for the dispersion, based on the compatibility of the agent with the polyol and the dispersed polymer, thereby allowing for a larger polymer content in the mixture. More recently, US 4 503 207 teaches the preparation of polymeric polyols prepared by the polymerization of acrylamide or methacrylamide in an aqueous solution, followed by removal of the water, in a conventional polyol. This prior art describes what could be called a first type of polymeric polyols, all based on the use of polyethers, although an odd reference mentions the possible use of hydroxylated polyesters or polyesteramides.

Subsequent to these first references there have appeared others describing processes for the preparation of polymeric polyols containing higher percentages of dispersed polymer, with acceptable viscosities and a paler colour. These improvements are attributed to the use of polyol polyethers modified by a process of esterification with maleic anhydride and subsequent treatment with ethylene oxide, using catalysts consisting of salts or oxides of divalent metals.

To be mentioned in this regard are the articles by A. Heyman published in the J. of Cellular Plastics 237 (1983) and 257 (1984) offering a general view of the subject and including theoretical considerations thereon; US 4 454 255 and US 4 458 038 disclosing processes for the preparation of the so-called "macromers", consisting of polyols containing unsaturations derived from the partial esterification of conventional polyols with maleic anhydride and subsequent isomerization and treatment with ethylene oxide so as to recover the hydroxylated chain and functionality of the polyol. The use of variable amounts of these products, together with conventional polyols produces, according to the patents, polymeric polyol polyethers having a high dispersed polymer content, acceptable viscosities, suitable for the preparation of flexible polyurethane foams and elastomers.

As a conclusion to a review of all this prior art, it may be said that, in the case of using dispersed poly mers prepared from vinyl monomers, the most widely used product is acrylonitrile.

The wide use of this compound is warranted by its high reactivity. Thus, when polyol polyethers are used as reaction medium, the acrylonitrile fairly easily forms covalent bonds as tertiary carbon atoms through a radical reaction. A good degree of dispersion stability is achieved through the formation of these covalent bonds of the polymer with the polyol.

Nevertheless, there are certain drawbacks to the use of acrylonitrile as polymer for the preparation of stable polymer dispersions, among which there are the colour taken on by the polymeric polyol and, consequently, by the foam produced therefrom. The polyacrylonitrile chains are known to have a tendency to form chromophoric groups, particularly at high temperatures. Since the reaction of a polyol with an isocyanate is strongly exothermic, when manufacturing polyurethane foams from acrylonitrile based polymeric polyols products are frequently obtained having a darker colouring in certain areas, coinciding usually with the areas where the heat dissipation is more difficult.

An additional difficulty with the use of acrylonitrile is the inflammability of the resulting foam and the difficulties for controlling it.

This is why alternatives to the massive use of acrylonitrile have been sought ever since the use of polymeric polyols for certain applications has extended.

There has thus been a marked trend towards replacing the acrylonitrile with other vinyl monomers, among them styrene. Since styrene does not have the reactivity of acrylonitrile, insofar as the formation of covalent bonds with the polyols is concerned, other processes have had to be used to keep the polymer dispersion stable.

Summary of the Invention.

The above discussed prior art contains references to some of these methods such as may be the addition to the polyol of a stabilizing agent having a structure similar to that of the polyol and of the dispersed polymer at the same time, or to reinforce the chemical nature of the polyol-polymer bond by the introduction of unsaturations, capable of producing covalent bonds between both components of the dispersion.

In the present invention, relating to the preparation of polyesters, a process has been devised which has shown itself to be highly effective to increase the stability and reinforce the chemical nature of the dispersion of a solid polymer in a polyester.

The process of the invention is characterised by the polymerization reaction of at least one ethylenically unsaturated monomeric compound in a hydroxylated polyester which is comprised of acid monomers or any derivatives thereof and hydroxylated monomers, has a molecular weight ranging from 1,000 to 5,000, is the result of a polyesterification reaction of at least one polycarboxylic acid or derivatives thereof and polyhydroxylated compounds and contains unsaturation due to the existence of between 0.001 and 0.5 mole % of an unsaturated monomer over the total mole content of all the acid monomers comprising it, the proportion of said monomeric compounds lying between 5 and 40 weight % of the total weight of the monomeric compounds themselves plus the hydroxylated polyester.

In one development of the invention, said hydroxylated polyester is the result of the addition of a saturated polyester and a partially unsaturated polyester, said addition result containing from 0.001 to 0.5 mole % of an unsaturated monomer on the total mole content of all the acid monomers forming it.

Also according to the invention, the unsaturation contained in the polyester is introduced by an esterification reaction with an unsaturated polycarboxylic acid or a derivative thereof, preferably with maleic anhydride.

It has been found that with the process of the invention it is possible to obtain polymeric polyesters having a dispersed polymer content of up to 40%, a limit determined by viscosity problems, having a paler colour as a result of it being possible to lower the amount of acrylonitrile, this being replaced by other monomers and, in general, with a higher dispersed polymer content.

The polyurethane foams and elastomers produced with these products by reaction with polyisocyanates and with the regular additives in the systems such as catalysts, surfactants, foaming agents, etc., provides good mechanical properties of hardness, compression strength, tear strength, tensile strength, etc, generally superior to those produced from conventional polyesters.

The preparation of the polymer dispersion in the polyester by this process is conducted by the addition over the hydroxylated polyester of a mixture of the same polyester and the vinyl compound or compounds and a radical generator catalyst or mixture thereof. If two polyesters, one conventional and the other modified, are used, a mixture of the vinyl monomer or monomers, the catalyst and the second polyester is added over the first polymer.

The addition is carried out slowly, with vigorous stirring under an inert atmosphere at a temperature of between 100 and 150°C, suitably adjusted so that the half life of the selected catalyst is about 5 minutes. The addition rate is controlled in such a way that the temperature is held within the above limits.

At the end of the addition, the same temperature is held for 30 minutes and finally vacuum is applied to remove the unreacted monomers and other volatile components.

As raw materials to be used in the process, all the polyesters may be products of the reaction of a polycarboxylic acid or a mixture thereof with polyhydroxylated compounds. Dicarboxylic acids and glycols are used preferably, although variable proportions of functional tri-, tetra-, penta- etc compounds may be added to attain an overall functionality in excess of 2, which is desirable for certain applications. As said above, the molecular weight of the hydroxylated polyesters used in the present invention lies between 1,000 and 5,000, preferably between 1,000 and 2,500 and the functionality is between 2 and 3, preferably between 2 and 2.5.

These are prepared by melting or any other of the methods extensively discussed in the specialised literature.

The acids may be aliphatic, cycloaliphatic or aromatic; they may be used alone or in mixtures thereof and, when preparing the polyester promoting the anchorage of the disperse polymer, one of the acids is substituted in a mole ratio of up to 10% by an unsaturated acid. This may be used alone or together with a conventional saturated polyester.

It should be understood that all that has been said up to here and will be said hereinafter relating to the acids is also good for the anhydrides, esters, acid chlorides and any other derivative of carboxylic acids in general.

Examples of the di- or polycarboxylic compounds which may be used in the process are adipic, succinic, glutaric, oxalic, malonic, trimethyladipic, pimelic, azalaic, sebacic, 1,3-cyclopentane dicarboxylic, 1,2-cyclohexane dicarboxylic, 1,3-cyclohexane dicarboxylic, 1,4-cyclohexane dicarboxylic, terephthalic, phthalic, isophthalic, 2,5-norbornane dicarboxylic, 1,4-naphthodioic, diphenic, 4,4-oxydibenzoic, diglycolic, 2,5-naphthalene dicarboxylic, benzene- 1,2,4-tricarboxylic acids, trimellitic anhydride, pyromellitic, hexahydrophthalic and tetrachlorophthalic acids.

Examples of unsaturated acids which may be used for preparing the partially unsaturated polyester are:
maleic, fumaric, itaconic, tetrahydrophthalic, etc., acids or any derivative thereof: esters, chlorides, etc.

Examples of the polyhydroxylated compounds are:
ethylene glycol, diethylene glycol and polyethylene glycols in general; propylene glycol, 1,3-propanediol, 1,3-butanediol, 1,4-butanediol, 1,5-pentanediol, 1,6-hexanediol, 2,2,4-trimethyl-1,6-hexanediol, 1,4-cyclohexanedimethanol, 1,3-cyclohexanedimethanol, 1,2-cyclohexanedimethanol, 1,2,3-propanetriol, trimethylolpropane, trimethylolethane, pentaerythritol, derivatives of ε-caprolactone, such as polycaprolactonediols, etc.

The percentage of disperse polymer in the polyester may reach 40%, this depending on the viscosity of the initial polyester, on the degree of unsaturation it contains and on the properties it is wanted to obtain both in the final polymeric polyester and in the foams or elastomers produced therefrom. The percentage of unsaturated monomer in the polyester chain may vary from 0.001 to 0.5 mole % of monomer per total moles of the acid monomers integrating the polyester.

The polymerization catalysts regularly used in the reaction may consist of one compound or of a mixture thereof, capable of generating free radicals. Examples of these compounds are benzoyl peroxide, acetyl peroxide, t-butyl hydroperoxide, cumyl hydroperoxide, di-t-butyl peroxyde, aza-bis-isobutyronitrile, etc. Benzoyl peroxide and aza-bis-isobutyronitrile have been used as preferred compounds in the process here described.

Finally, there may be used as vinyl monomers, further to acrylonitrile and styrene, all those compounds having ethylenic unsaturation, e.g. olefin hydrocarbons such as butadiene, isoprene, pentadiene, aromatic hydrocarbons such as vinyltoluene, divinylbenzene, alpha-methylstyrene, ethylstyrene, isopropylstyrene, chlorostyrene; acrylic monomers such as acrylic acid, methyl acrylate, methyl methacrylate, butyl methacrylate, acrylamide, etc.; vinyl esters or vinylketones such as vinyl acetate or methylvinylketone, etc. These compounds may be used alone or in mixture thereof.

There are described below examples of the process described in the present invention. These should be considered exclusively as illustrative, without any limitation on the scope of legal protection being sought.

EXAMPLE 1

560 g of a polyester prepared by the melting process from adipic acid, maleic anhydride, ethylene glycol and diethylene glycol having a hydroxyl number of 53 (approximate molecular weight 2,000) and a maleic anhydride content of 0.3 mole % relative to all the acid components of the polyester were heated in a 1 litre reactor.

A mixture of the same polyester (280 g), 15 g of acrylonitrile, 135 g of styrene and 3 g of aza-bis-isobutyronitrile was added over the polyester, with vigorous stirring, under an inert atmosphere and holding the temperature to 115-120°, the addition rate being controlled such that the temperature was held between the above mentioned limits. After the addition was over, the same stirring and temperature conditions were held for 30 minutes and thereafter vacuum was applied progressively down to 1 mm Hg, held for two hours, to ensure removal of the remains of unreacted monomer or any volatile compound. This process gave a product having a viscosity of 8,100 cps at 25°C and a hydroxyl number of 46.

EXAMPLE 2

Following the process described in Example 1, to 830 g of a polyester prepared from adipic acid, diethylene glycol, ethylene glycol and butanediol having an hydroxyl number of 60, there was added a mixture of 353 g of the same polyester, 62 g of a polyester prepared from the same monomers, but having also 5% maleic anhydride, 373 g of styrene, 160 g of methyl methacrylate and 11 g of aza-bis-isobutyronitrile. This process gave a product having a viscosity of 17,400 cps at 25°C and a hydroxyl number of 44.

EXAMPLE 3

Following the same process described in Example 1, to 650 g of a polyester prepared from adipic acid, diethylene glycol and trimethylolpropane having a hydroxyl number of 45 there was added a mixture of 285 g of the same polyester, 40 g of the unsaturated polyester of Example 2, 290 g of styrene, 32 g of methyl methacrylate and 8.2 g of aza-bis-isobutyronitrile. This process gave a product having a viscosity of 15,600 cps at 25°C and a hydroxyl number of 35.

## Claims

1.- A process for the preparation of polymer dispersions in hydroxylated polyesters, suitable for the preparation of polyurethane foams and elastomers, characterised by a polymerization reaction of at least one ethylenically unsaturated monomeric compound in a hydroxylated polyester which is constituted by acid monomers or any derivatives thereof and hydroxylated monomers, has a molecular weight ranging from 1,000 to 5,000, is the result of an esterification reaction between at least one polycarboxylic acid or a derivative thereof with polyhydroxylated compounds, and contains unsaturation due to the existence of 0.001 to 0.5 mole % of an unsaturated monomer over the total mole content of all the acid monomers comprising it, the proportion of said monomeric compounds lying between 5 and 40 weight % of the total weight of the monomeric compounds themselves plus the hydroxylated polyester.

2.- The process of claim 1, characterised in that said hydroxylated polyester is the result of adding a saturated polyester to a partially unsaturated polyester, said addition result containing from 0.001 to 0.5 mole % of an unsaturated monomer over the total mole content of all the acid monomers comprising it.

3.- The process of any one of the previous claims, characterised in that said monomeric compound is selected from the group formed by butadiene, isoprene, pentadiene, alpha-methylstyrene, isopropylstyrene, ethylstyrene, chlorostyrene, vinyltoluene, divinylbenzene, acrylic acid, methyl acrylate, methyl methacrylate, vinylidene chloride, vinyl acetate, methylvinylketone, acrylonitrile and styrene, alone or in combination.

4.- The process of any one of the previous claims, characterised in that the unsaturation contained in the polyester is introduced by an esterification reaction with an unsaturated polycarboxylic acid or with a compound derived from one of said acids.

5.- The process of claim 4, characterised in that said compound derived from an unsaturated polycarboxylic acid is maleic anhydride.